# EUROPÄISCHE PATENTSCHRIFT

(11) **EP 0 737 817 B1**
(45) Veröffentlichungstag und Bekanntmachung des Hinweises auf die Patenterteilung: **06.05.1999**
(21) Anmeldenummer: 96104005.2
(22) Anmeldetag: 14.03.1996
(51) Int. Cl.: F16B 13/08

(54) **Befestigungselement mit Spreizelement**
Fastening device with expanding part
Dispositif de fixation avec élément d'expansion

(30) Priorität: 15.04.1995 DE 19514159; 26.05.1995 DE 19519350; 02.10.1995 DE 19536786
(43) Veröffentlichungstag der Anmeldung: 16.10.1996
(73) Patentinhaber: fischerwerke Artur Fischer GmbH & Co. KG, D-72178 Waldachtal (DE)
(72) Erfinder: Fischer, Artur, Prof. Dr.h.c. Dr.-Ing. E.h., 72178 Waldachtal (DE); Porlein, Gerhard, 72178 Waldachtal (DE); Mäder, Eberhard, 72184 Eutingen-Göttelfingen (DE)

(56) Entgegenhaltungen:
- DE-A- 2 914 739
- DE-A- 3 346 214
- DE-A- 3 413 854

## Beschreibung

Die Erfindung betriffl ein Befestigungselement mit am hinteren Ende angeordnetem Haltemittel zur Verspannung eines Gegenstandes gemäß dem Oberbegriff des Anspruches 1.

Aus der DE-OS 29 14 739 ist ein Befestigungselement bekannt, das im Bereich seiner vorderen Stirnseite einen Spreizbereich hat, der durch eine zum vorderen Stirnende eine ansteigende Grundfläche aufweisenden Längsnut mit einem in der Längsnut eingesetzten Spreizelement gebildet ist. Die Verankerung eines solchen Befestigungselementes erfolgt in der Weise, daß nach dem Eintreiben des Schaftes in ein vorgebohrtes Bohrloch eines Bauteils beim Verspannen des zu befestigenden Gegenstandes am Bauteil der Schaft axial gegenüber dem sich in der Bohrlochwandung verkrallenden Spreizelement verschoben wird. Aufgrund der ansteigenden Grundfläche der das Spreizelement aufnehmenden Längsnut wird das Spreizelement radial nach außen gedrückt und damit das Befestigungselement im Bohrloch verkeilt. Nachteilig bei dem bekannten Befestigungselement ist jedoch, daß das Spreizelement an seiner Außenfläche Zähne aufweist, die quer zur Längsrichtung über den Schaft hinausragende gerade Kanten bilden. Diese die gesamte Breite des Spreizelementes einnehmenden Kanten bilden beim Eintreiben des Befestigungselementes in das Bauteil einen hohen Widerstand, der insbesondere bei einem aus Beton bestehenden Bauteil neben dem hohen und wenig montagefreundlichen Eintreibwiderstand auch zu die Verankerungsfunktion beeinträchtigenden Beschädigungen des Befestigungselementes führen kann. Des weiteren wird beim Eintreiben vom Spreizelement Material von der Bohrlochinnenwandung abgeschabt. Dieses Material sammelt sich in der Längsnut und führt unter Umständen zu einer Verklemmung des Spreizelementes in der Längsnut. Dadurch wird die Verschiebbarkeit des Spreizelementes in der Längsnut soweit beeinträchtigt, daß ein Nachspreizen nach der Verankerung bei einer Erweiterung des Bohrloches durch Rißbildung nicht mehr möglich ist. Aufgrund dieser Beeinträchtigung ist das bekannte Befestigungselement für einen Einsatz in der Zugzone, in der Risse auftreten, nicht geeignet. Ein weiterer Grund für die Nichteignung in der Zugzone und relativ geringe Haltewerte auch in ungerissenem Beton ergibt sich bei dem bekannten Befestigungselement durch die Begrenzung der Längsnut zum vorderen Stirnende des Befestigungselementes hin durch eine Anschlagfläche. Damit ist einerseits nur ein geringer Ansteigwinkel für die Grundfläche der Längsnut erreichbar und andererseits muß auch die Länge des Spreizelementes gegenüber der Länge der Längsnut erheblich verkürzt werden, um einen ausreichenden Verschiebeweg zur Verankerung zu erhalten. Kommt desweiteren noch eine Bohrlocherweiterung durch Rißbildung hinzu, besteht die Gefahr, daß das Spreizelement an der vorderen Anschlagfläche der Längsnut anstößt und keine weitere Spreizmöglichkeit bietet. Dieses Situation kann beispielsweise auch dann eintreten, wenn das vorzubohrende Bohrloch für das Befestigungselement bei der Erstellung des Bohrloches etwas größer ausfällt.

Schließlich ergibt sich durch die plane Grundfläche der Längsnut und plane Auflagefläche des Spreizelementes beim Aufspreizvorgang eine hohe Flächenpressung, die zum Kaltverschweißen führen kann. Dadurch wird ebenfalls das Nachspreizen und damit die Eignung in der Zugzone beeinträchtigt.

Aus der DE 33 34 754 C2 ist ein Spreizdübel bekannt, dessen Dübelkörper hülsenförmig mit einem Innengewinde für eine Schraube oder Gewindestange ausgebildet ist. Das keilförmige Spreizelement dieses Spreizdübels ist ein Teil des Dübelkörpers und über einen zwischen Einschnitten verbleibenden, als Solchbruchstelle wirkenden Steg mit dem Dübelkörper verbunden. Die Einschnitte sind so gelegt, daß einerseits eine zum vorderen Ende des Dübelkörpers ansteigende Schrägfläche und andererseits die Keilform des Spreizelementes entsteht. Um am Spreizelement eine Angriffsfläche für ein Spreizwerkzeug zu schaffen, ist am Spreizelement ein in die Hülsenbohrung des Dübelkörpers ragender Anschlag angeformt.

Zur Verankerung des Spreizdübels wird das Spreizelement mit einem Spreizwerkzeug zunächst an der Sollbruchstelle abgerissen und danach zum vorderen Ende des Dübelkörpers hin verschoben. Schon das Abreißen der Sollbruchstelle erfordert eine Schubkraft, die eine Abstützung des bekannten Spreizdübels am Bohrlochgrund erforderlich macht. Des weiteren ist zur Überbrückung des die beiden Gleitflächen des Dübelkörpers und des Spreizelementes trennenden Einschnittes bereits eine größere axiale Verschiebung des Spreizelementes erforderlich, um eine Spreizwirkung zu erzielen. Da ferner sowohl das Spreizelement als auch der Dübelkörper aus dem gleichen Material bestehen, besteht die Gefahr, daß bei der Verspreizung die beiden Gleitflächen durch Kaltverschweißen und Fressen derart beschädigt werden, daß keine Nachspreizung eintritt. Damit ist der bekannte Spreizdübel nicht für einen Einsatz in der Zugzone geeignet, in der Bohrlocherweiterungen durch Risse auftreten können, die einen Ausgleich durch Nachspreizen erfordern.

Der Erfindung liegt die Aufgabe zugrunde, ein Befestigungselement der eingangs genannten Gattung derart zu verbessern, daß das Befestigungselement bei geringem Widerstand eintreibbar und in einfacher Weise in einem Bauteil verankerbar ist, und durch günstiges Nachspreizverhalten hohe Haltewerte auch dann aufweist, wenn durch Rißbildung eine Bohrlocherweiterung eintritt.

Die Lösung dieser Aufgabe wird durch die in Anspruch 1 angegebenen Merkmale erreicht. Bei der durch Prägung hergestellten Längsnut mit einem trapezförmigen Querschnitt entstehen im Winkel zueinander stehende Gleitflächen, die an ihrer Oberfläche verdichtet sind. Durch die Verdichtung wird das Gleitverhalten begünstigt und damit die Neigung zum Kaltverschweißen und Fressen bei der Verschiebung des Spreizelementes in der Längsnut während des Aufspreizvorganges vermindert. Eine weitere Minderung der Fressneigung wird durch die Reduzierung der Flächenpressung aufgrund der beiden im Winkel zueinander stehenden Gleitflächen erreicht, die gleichzeitig auch die Seitenführung des Spreizelementes bei dessen Verschiebung übernehmen.

Durch die an der Außenfläche des Spreizelementes angeordneten, dachförmig ausgebildeten und mit einem Teil ihrer Höhe den Schaft überragenden Zähnen wird beim Eintreiben des Befestigungselementes in das vorbereitete Bohrloch nur eine Riefe ausgeschabt. Da nur der Scheitelpunkt des gezahnten Spreizelementes sich in die Bohrlochwandung eingräbt, ist ein geringer Widerstand beim Eintreiben des Befestigungselementes zu überwinden.

Nach dem Eintreiben halten die am Spreizelement angeordneten Zähne diesen unverrückbar im Bohrloch, während der Schaft beim Verankerungsvorgang gegenüber dem Spreizelement axial verschoben wird. Durch die ansteigende Längsnut wird das Spreizelement radial nach außen in die Bohrlochwandung gedrückt, wobei durch die Dachform der Zähne der Eindringwiderstand der Außenfläche des Spreizelementes in die Bohrlochwandung reduziert wird. Demzufolge wird für die Verankerung nur ein geringes Eindrehmoment benötigt. Da desweiteren die ansteigende Grundfläche der Längsnut in einem Abstand zum vorderen Stirnende am Außenumfang des Schaftes ausläuft, kann zum einen ein längeres Spreizelement mit größerer Preßfläche verwendet werden und zum anderen durch den steileren Ansteigwinkel der Grundfläche bei kleineren axialen Verschiebungen eine größere radiale Aufspreizung erzielt werden.

Als besonders vorteilhaft sowohl für das Gleitverhalten als auch für die Herstellung der Längsnut hat sich erwiesen, wenn die beiden Gleitflächen in einem Winkel von 100°-120° zueinander stehen und die Breite der Bodenfläche der beiden Gleitflächen geringer ist als die Breite der Bodenfläche der beiden Auflageflächen des Spreizelementes. Letzteres stellt sicher, daß das Spreizelement mit seinen Auflageflächen ausschließlich auf den Gleitflächen aufliegt.

Als zweckmäßig hat sich eine Ausbildung erwiesen, bei der die Längsnut an ihrem zum hinteren Stirnende des Befestigungselementes weisenden Ende mindestens einen dem halben Durchmesser des Schaftes entsprechende Tiefe aufweist und der Ansteigwinkel der Grundfläche zwischen 11° und 13° liegt.

Damit das Spreizelement beim Einschlagen des Befestigungselementes abgestützt wird, ist ein halbrund ausgebildeter Anschlag an der zum hinteren Ende des Befestigungselementes weisenden Begrenzung der Längsnut vorgesehen, an dem das Spreizelement an seiner tiefsten Position anliegt.

Weiterhin kann ein Halteelement, beispielsweise ein Gummiring, Prägesicken oder dergleichen, das Spreizelement verschiebbar in der Längsnut vor dem Einschlagen des Befestigungselementes in das Bohrloch festhalten, damit das Spreizelement nicht unbeabsichtigt aus der Längsnut herausfällt. Eine gute Sperrwirkung der Zähne bei geringem Einschlagwiderstand wird dadurch erreicht, daß die Zähne unterschiedliche Zahnflanken aufwiesen, wobei die kürzere Zahnflanke in Richtung zum vorderen Stirnende angeordnet ist.

Um das Eintreiben zu erleichtern, kann in weiterer Ausgestaltung der Erfindung am vorderen Ende des Spreizelementes eine bis zur Spitze des ersten Zahnes sich erstrekkende Anlaufschräge angeordnet sein.

In einer weiteren Ausgestaltung der Erfindung kann das Befestigungselement an seinem hinteren Ende ein Innengewinde aufweisen, so daß mittels einer Schraube, Gewindestange oder dgl. ein Gegenstand an dem im Mauerwerk verankerten Befestigungselement befestigbar ist. Durch die am Dübelkörper angreifende Gewichtsbelastung ergibt sich eine geringfügige Verschiebung zwischen dem Dübelkörper und dem festsitzenden Spreizelement, die aufgrund der ansteigenden Grundfläche der Längsnut zu einer Verstärkung der Verspreizung führt. Aufgrund der guten Gleiteigenschaften der Gleitflächen tritt eine axiale Verschiebung zwischen Spreizelement und Dübelkörper auch dann ein, wenn durch Rißbildung eine Bohrlocherweiterung entsteht.

In manchen Fällen ist die Verschiebung des Dübelkörpers gegenüber dem Spreizelement unerwünscht, da dadurch auch eine Verschiebung der Schraube bzw. Gewindestange eintritt. Um eine solche Verschiebung zu vermeiden, ist in einer weiteren zweckmäßigen Ausgestaltung vorgesehen, daß sich an das Innengewinde eine Bohrung anschließt, die sich über die Anschlagschulter hinaus in die Längsnut erstreckt und diese mit einem Teil Ihres Querschnitts schneidet, und daß das Spreizelement mit der Schraube, Gewindestange oder einem Einschlagwerkzeug zum vorderen Ende hin zur Verankerung des Befestigungselementes verschiebbar ist.

Zwischen dem Spreizelement und der einzudrehenden Schraube bzw. Gewindestange kann des weiteren ein elastisches Element, vorzugsweise eine Druckfeder, angeordnet sein. Durch eine solche elastische Verspannung des Spreizelementes wird bei einer Bohrlocherweiterung durch Rißbildung das Spreizelement nachgeschoben, so daß zum Nachspreizen keine axiale Verschiebung des Dübelkörpers erforderlich ist. Als elastisches Element kann auch ein Gummibolzen verwendet werden.

In der Zeichnung ist die Erfindung anhand von Ausführungsbeispielen dargestellt.

Es zeigen:
- Figur 1: das in einem Bohrloch eines Bauteils eingesetzte Befestigungselement mit in einer Längsnut seines Spreizbereiches einliegendem Spreizelement,
- Figur 2: einen Teillängsschnitt des Befestigungselementes von Figur 1 in verankerter Position,
- Figur 3: einen Querschnitt des Befestigungselementes nach Figur 2 gemäß der Schnittlinie A-A,
- Figur 4: einen Längsschnitt eines Befestigungselementes mit Innengewinde beim Verankerungsvorgang mit einem Einschlagwerkzeug und
- Figur 5: das Befestigungselement gemäß Figur 4 mit eingedrehter Gewindestange und einem zwischen Spreizelement und Gewindestange angeordnetem elastischen Element.

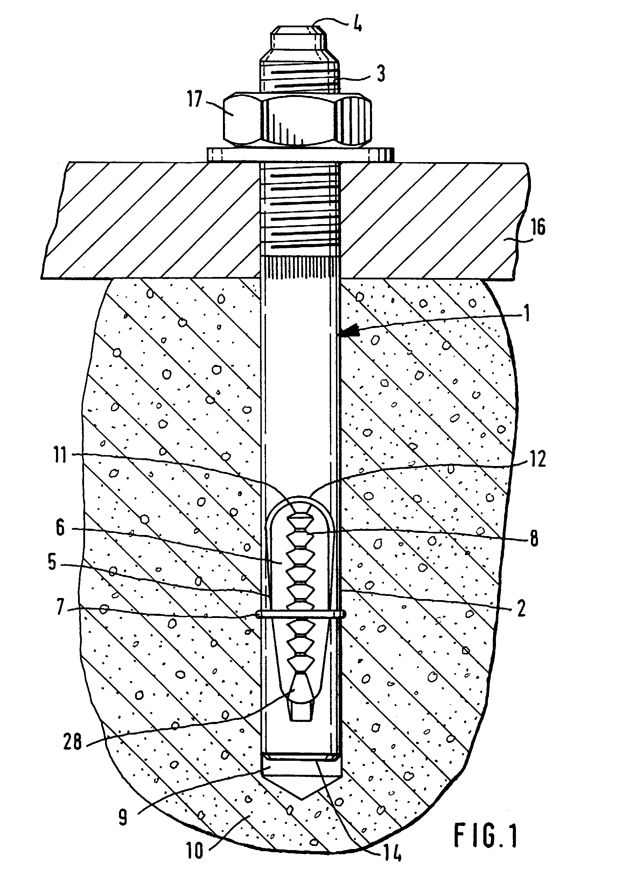

Das in Figur 1 dargestellte Befestigungselement 1 hat einen Schaft 2 mit einem Außengewinde 3 am hinteren Ende 4 und einen Spreizbereich, der durch eine Längsnut 5 mit trapezförmigem Querschnitt und einem in dieser Längsnut 5 einliegenden Spreizelement 6 gebildet ist. Das in der Längsnut 5 leicht verschiebbare Spreizelement 6 wird durch ein Halteelement 7 - im Ausführungsbeispiel ein Gummiring - gehalten.

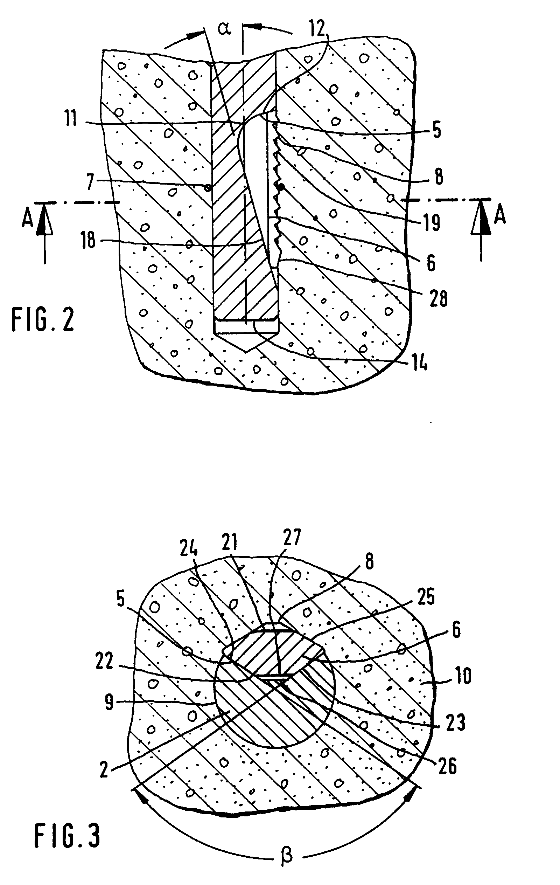

Das Spreizelement 6 weist an seiner Außenfläche Zähne 8 auf, die im Querschnitt dachförmig ausgebildet sind (siehe Figur 3). Beim Eintreiben des Befestigungselementes 1 in das Bohrloch 9 des Bauteiles 10 befindet sich das Spreizelement 6 in seiner tiefsten Position, bei der die hintere, halbrund geformte Stirnseite 11 des Spreizelementes 6 an der ebenfalls halbrund geformten und als Anschlag 12 dienenden Begrenzung der Längsnut 5 anliegt. In dieser Position überragen die Zähne 8 mit einem Teil ihrer Höhe den Schaft 2 des Befestigungselementes.

Das Befestigungelement 1 wird durch den zu befestigenden Gegenstand 16 hindurch in das Bohrloch eingetrieben. Durch Aufdrehen der Mutter 17 auf den überstehenden Gewindeabschnitt 3 wird der Schaft 2 gegenüber dem Spreizelement 6 axial in Richtung Bohrlochmündung verschoben, sodaß das Spreizelement 6 durch die ansteigende Grundfläche 18 der Längsnut 5 radial nach außen gedrückt wird (siehe Figur 2). Dabei graben sich die Zähne 8 des Spreizelementes 6 in die Bohrlochwandung ein und bewirken die Verankerung des Befestigungselementes. Die Zähne 8 weisen ein sägezahnförmiges Profil auf, wobei die Zahnflanke 19 zum vorderen Stirnende 14 hin zur Reduzierung des Eintreibwiderstandes abgeschrägt ist. Ferner weist das Spreizelement 6 eine Anlaufschräge 28 auf, die sich vom vorderen Ende des Spreizelementes bis zur Spitze des ersten Zahnes erstreckt.

Figur 3 zeigt einen Querschnitt gemäß der in Figur 2 eingezeichneten Schnittlinie A-A. Die dachförmige Ausbildung des Zahns 8 begünstigt ein tiefes Eindringen des Spreizelementes 6 in die Bohrlochwandung des Bauteils 10. In Figur 3 ist auch der trapezförmige Querschnitt der Längsnut 5 erkennbar. Durch die Trapezform entstehen zwei im Winkel zueinander stehende Gleitflächen 22, 23 auf denen das Spreizelement 6 mit seinen beiden Auflageflächen 24, 25 aufsitzt. Der von den beiden Gleitflächen beziehungsweise Auflageflächen eingeschlossene Winkel β beträgt vorzugsweise 100° - 120°. Um ein Gleiten der Auflageflächen 24, 25 auf den Gleitflächen 22, 23 sicherzustellen, ist der die Breite der Bodenfläche 26 zwischen den beiden Gleitflächen etwas geringer als die Breite der Bodenfläche 27 zwischen den beiden Auflageflächen 24, 25 des Spreizelementes 6.

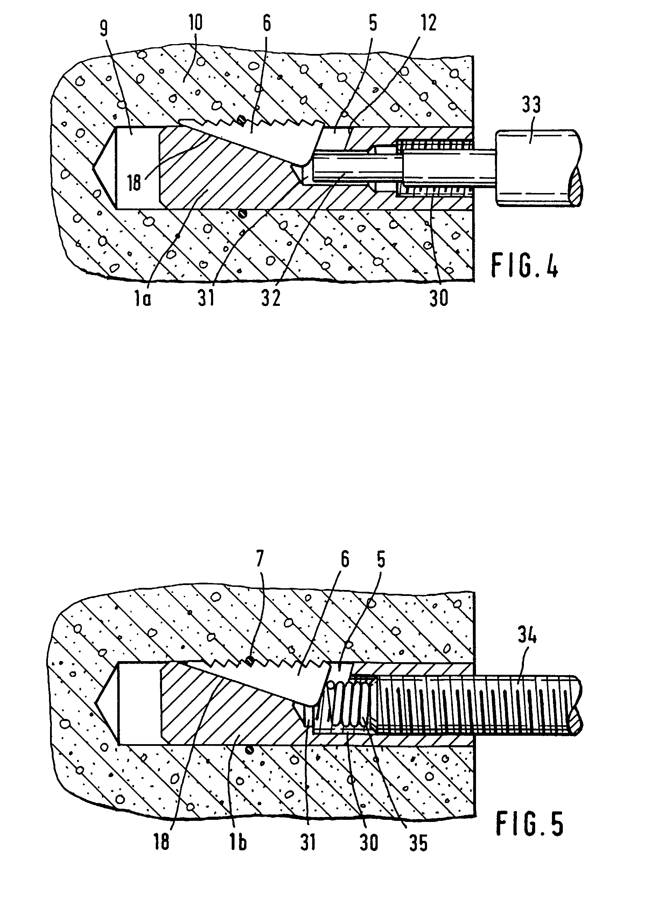

Das in Figur 4 dargestellte Befestigungselement 1a weist an seinem hinteren Ende ein Innengewinde 30 zur Aufnahme einer Schraube oder einer Gewindestange auf. An das Innengewinde 30 schließt sich eine im Durchmesser gegenüber dem Kerndurchmesser des Innengewindes reduzierte Bohrung 31 an, die sich über die Anschlagschulter 12 hinaus in die Längsnut 5 erstreckt und diese mit einem Teil ihres Querschnitts schneidet. Dadurch ragt das Spreizelement 6 mit seinem hinteren Ende in die Bohrung 31, so daß der Dorn 32 des Einschlagwerkzeuges 33 am hinteren Ende des Spreizelementes 6 anstößt. Mit dem Einschlagwerkzeug 33 kann nunmehr das Spreizelement 6 auf der ansteigenden Grundfläche 18 der Längsnut 5 in Richtung Bohrlochgrund verschoben werden. Dabei verkeilt sich das Spreizelement 6 im Bohrloch 9 des Bauteiles 10 und bewirkt die Verankerung des Befestigungselementes. Die axiale Verschiebung des Spreizelementes 6 kann auch mit der in das Innengewinde 30 einzudrehenden Schraube oder Gewindestange direkt erfolgen. In diesem Fall kann entweder das Innengewinde 30 über die Anschlagschulter 12 hinaus verlängert werden, oder an der Stirnseite der Schraube bzw. Gewindestange ein der Bohrung 31 entsprechender reduzierter Abschnitt angeordnet sein.

In der Darstellung gemäß Figur 5 ist in das Innengewinde 30 des Befestigungselementes 1b eine Gewindestange 34, beispielsweise zur Abhängung von Rohren, Decken oder dgl., eingedreht. Zwischen dem Spreizelement 6 und der Gewindestange 34 ist eine Druckfeder 35 als elastisches Element angeordnet. Die Druckfeder 35 kann entweder nach der Verankerung des Befestigungselementes 1b mittels eines Einschlagwerkzeuges eingeschoben und mit der Gewindestange 34 verspannt werden, oder unmittelbar zur axialen Verschiebung des Spreizelementes 6 mittels der Gewindestange 34 verwendet werden. Die Druckfeder übt auf das Spreizelement 6 nach dem Eindrehen einer Schraube oder der Gewindestange einen ständigen Druck aus, so daß einerseits das Spreizelement 6 bei einer Bohrlocherweiterung durch Rißbildung nachgeschoben und andererseits gleichzeitig eine Vibrationssicherung für die Gewindestange 34 erreicht wird.

Das Spreizelement 6 kann entweder aus Temperguß im Druckgußverfahren oder durch Kaltumformung in einem Stanz- und Biegewerkzeug hergestellt werden. Ein aus Temperguß hergestelltes Spreizelement weist aufgrund des Graphitgehalts im Temperguß sehr gute Gleiteigenschaften auf.

## Patentansprüche

1. Befestigungselement mit am hinteren Ende angeordnetem Haltemittel zur Verspannung eines Gegenstandes an einem Bauteil, und wenigstens einem vom vorderen Stirnende ausgehenden und in Längsrichtung über einen Teil der Länge des Schaftes des Befestigungselementes verlaufenden Spreizbereich, der durch eine zum vorderen Stirnende eine ansteigende Grundfläche aufweisenden Längsnut mit in der Längsnut eingesetztem und verschiebbaren Spreizelement gebildet ist, **dadurch gekennzeichnet**, daß die Längsnut (5) durch eine Prägung gebildet ist und einen trapezförmigen Querschnitt mit zwei in einem Winkel zueinander stehenden und zum vorderen Stirnende (14) hin radial ansteigenden Gleitflächen (22, 23) aufweist, und daß das Spreizelement (6) zwei auf den Gleitflächen (22, 23) aufsitzende Auflageflächen (24, 25) hat und an seiner Außenfläche mit dachförmig ausgebildeten Zähnen (8) versehen ist, die den Schaft (2) zumindest mit einem Teil ihrer Höhe überragen.

2. Befestigungselement nach Anspruch 1, **dadurch gekennzeichnet**, daß die beiden Gleitflächen (22, 23) der Längsnut (5) in einem Winkel von 100° - 120° zueinander stehen.

3. Befestigungselement nach Anspruch 1, **dadurch gekennzeichnet**, daß die Breite der Bodenfläche (26) zwischen den beiden Gleitflächen (22, 23) geringer ist als die Breite der Bodenfläche (27) zwischen den beiden Auflageflächen (24, 25) des Spreizelementes (6).

4. Befestigungselement nach Anspruch 1, **dadurch gekennzeichnet**, daß die Längsnut (5) an ihrem zum hinteren Stirnende (4) des Befestigungselementes (1) weisenden Ende mindestens eine dem halben Durchmesser des Schaftes (2) entsprechende Tiefe aufweist und der Ansteigwinkel (α) der Grundfläche (18) zwischen 11° und 13° liegt.

5. Befestigungselement nach Anspruch 1, **dadurch gekennzeichnet**, daß das Spreizelement (6) an der zum hinteren Ende (4) des Befestigungselementes weisenden Begrenzung der Längsnut (5) an einer halbrund ausgebildeten Anschlagschulter (12) anliegt.

6. Befestigungselement nach Anspruch 1, **dadurch gekennzeichnet**, daß an dem Spreizelement (6) ein Gummiring als Halteelement (7) angreift, welches das Spreizelement (6) lösbar in der Längsnut (5) festhält.

7. Befestigungselement nach Anspruch 1, **dadurch gekennzeichnet**, daß die Zähne (8) unterschiedliche Zahnflanken aufweisen, wobei die kürzere Zahnflanke (19) in Richtung zum vorderen Stirnende (14) angeordnet ist.

8. Befestigungselement nach Anspruch 1, **dadurch gekennzeichnet**, daß am vorderen Ende des Spreizelementes (6) eine Anlaufschräge (28) angeordnet ist, die sich bis zur Spitze des ersten Zahnes (8) erstreckt.

9. Befestigungselement nach Anspruch 1, **dadurch gekennzeichnet**, daß am hinteren Ende des Befestigungselementes (1a, 1b) ein Innengewinde (30) für eine Schraube, Gewindestange (34) oder dgl. angeordnet ist.

10. Befestigungselement nach Anspruch 9, **dadurch gekennzeichnet**, daß sich an das Innengewinde (30) eine Bohrung (31) anschließt, die sich über die Anschlagschulter (12) hinaus in die Längsnut (5) erstreckt und diese mit einem Teil ihres Querschnitts schneidet, und daß das Spreizelement (6) mit der Schraube, Gewindestange (34) oder einem Einschlagwerkzeug (33) zum vorderen Ende hin zur Verankerung des Befestigungselementes (1a, 1b) verschiebbar ist.

11. Befestigungselement nach Anspruch 1, **dadurch gekennzeichnet**, daß das Spreizelement (6) aus Temperguß hergestellt ist.

12. Befestigungselement nach Anspruch 1, **dadurch gekennzeichnet**, daß das Spreizelement (6) aus einer Blechplatine hergestellt ist, wobei die Ränder der Blechplatine dachförmig nach innen eingebogen und die Zähne (8) eingeprägt sind.

## Claims

1. A fixing element having retaining means arranged at its rear end for clamping an article to a building component, and having at least one expansion zone starting from the leading end and extending in the longitudinal direction for a part of the length of the shank of the fixing element, which expansion zone is formed by a longitudinal slot having a base sloping upwards towards the leading end with an expander element inserted in the longitudinal slot and displaceable therein, **characterized in that** the longitudinal slot (5) is formed by stamping and has a trapezoidal cross-section having two sliding surfaces (22, 23) arranged at an angle to one another and rising radially towards the leading end (14), and the expander element (6) has two bearing surfaces (24, 25) resting on the sliding surfaces (22, 23) and is provided on its external surface with teeth (8) of roof-shaped construction which project at least with a part of their height beyond the shank (2).

2. A fixing element according to claim 1, **characterized in that** the two sliding surfaces (22, 23) of the longitudinal slot (5) are arranged at an angle of 100° - 120° to one another.

3. A fixing element according to claim 1, **characterized in that** the width of the basal area (26) between the two sliding surfaces (22, 23) is less than the width of the basal area (27) between the two bearing surfaces (24, 25) of the expander element (6).

4. A fixing element according to claim 1, **characterized in that** the longitudinal slot (5) has at its end facing towards the rear end (4) of the fixing element (1) at least a depth corresponding to half the diameter of the shank (2), and the ascending angle (α) of the base (18) lies between 11° and 13°.

5. A fixing element according to claim 1, **characterized in that** at the limit of the longitudinal slot (5) facing towards the rear end (4) of the fixing element the expander element (6) bears against a semicircular stop shoulder (12).

6. A fixing element according to claim 1, **characterized in that** a retaining element (7) in the form of a rubber ring acts on the expander element (6), which retaining element holds the expander element (6) displaceably in the longitudinal slot (5).

7. A fixing element according to claim 1, **characterized in that** the teeth (8) have disparate tooth flanks, the shorter tooth flank (19) being arranged facing towards the leading end (14).

8. A fixing element according to claim 1, **characterized in that** a ramp-like slope (28) extending to the tip of the first tooth (8) is arranged at the leading end of the expander element (6).

9. A fixing element according to claim 1, **characterized in that** an internal thread (30) for a screw, threaded rod (34) or similar means is arranged at the rear end of the fixing element (1a, 1b).

10. A fixing element according to claim 9, **characterized in that** a bore (31), which extends beyond the stop shoulder (12) into the longitudinal slot (5) and intersects this with a part of its cross-section, adjoins the internal thread (30), and in that the expander element (6) is displaceable with the screw, threaded rod (34) or a driving-in tool (33) towards the leading end in order to anchor the fixing element (1a, 1b).

11. A fixing element according to claim 1, **characterized in that** the expander element (6) is manufactured from malleable cast iron.

12. A fixing element according to claim 1, characterized in that the expander element (6) is manufactured from a sheet metal blank, the edges of the sheet metal blank being bent inwards in a roof shape and the teeth (8) being stamped in.

## Revendications

1. Dispositif de fixation comportant des moyens de maintien, disposés à l'extrémité arrière pour brider un objet sur une pièce de structure et au moins une zone d'expansion qui part de l'extrémité frontale avant, est orientée selon la direction longitudinale sur une partie de la longueur du fût du dispositif de fixation et qui est formée par une rainure longitudinale qui présente à l'extrémité frontale avant une surface de base en pente montante et contient un élément d'expansion inséré dans la rainure longitudinale et pouvant y coulisser, caractérisé par le fait que la rainure longitudinale (5) est formée par un estampage et présente une section trapézoïdale avec deux surfaces de glissement (22, 23) qui font un angle l'une avec l'autre et sont en pente montant radialement vers l'extrémité frontale avant (14), et que l'élément d'expansion (6) a deux surfaces d'appui (24, 25) qui reposent sur les surfaces de glissement (22, 23) et qu'il est muni, sur sa surface extérieure, de dents (8) qui ont la forme d'un toit et dépassent au-delà du fût (2) au moins sur une partie de leur hauteur.

2. Dispositif de fixation selon la revendication 1, caractérisé par le fait que les deux surfaces de glissement (22, 23) de la rainure longitudinale (5) font l'une avec l'autre un angle de 100° - 120°.

3. Dispositif de fixation selon la revendication 1, caractérisé par le fait que la largeur de la surface de fond (26) entre les deux surfaces de glissement (22, 23) est inférieure à la largeur de la surface de fond (27) entre les deux surfaces d'appui (24, 25) de l'élément d'expansion (6).

4. Dispositif de fixation selon la revendication 1, caractérisé par le fait qu'à son extrémité orientée vers l'extrémité frontale arrière (4) du dispositif de fixation (1), la rainure longitudinale (5) présente au moins une profondeur correspondant au demi-diamètre du fût (2) et que l'angle (α) de pente montante de la surface de base (18) vaut entre 11° et 13°.

5. Dispositif de fixation selon la revendication 1, caractérisé par le fait qu'à la limite de la rainure longitudinale (5) orientée vers l'extrémité arrière (4) du dispositif de fixation, l'élément d'expansion (6) s'appuie sur un épaulement de butée (12) en forme de demi-rond.

6. Dispositif de fixation selon la revendication 1, caractérisé par le fait qu'agit sur l'élément d'expansion (6), comme élément de maintien (7) une bague de caoutchouc qui maintient, de façon amovible, l'élément d'expansion (6) dans la rainure longitudinale (5).

7. Dispositif de fixation selon la revendication 1, caractérisé par le fait que les dents (8) présentent différents flancs de dents, le flanc de dent le plus court (19) étant disposé en direction de l'extrémité frontale avant (14).

8. Dispositif de fixation selon la revendication 1, caractérisé par le fait qu'à l'extrémité avant de l'élément d'expansion (6) est disposée une obliquité d'approche (28) qui s'étend jusqu'à la pointe de la première dent (8).

9. Dispositif de fixation selon la revendication 1, caractérisé par le fait qu'à l'extrémité arrière du dispositif de fixation (1) est disposé un filetage intérieur (30) pour une vis, une tige filetée (34) ou analogue.

10. Dispositif de fixation selon la revendication 9, caractérisé par le fait qu'au filetage intérieur (30) se raccorde un perçage (31) qui s'étend, au-delà de l'épaulement de butée (12), dans la rainure longitudinale (5) et recoupe celle-ci par une partie de sa section et qu'avec la vis, la tige filetée (34) ou un outil de frappe (33), on peut faire coulisser l'élément d'expansion (6) jusqu'à l'extrémité avant pour ancrer le dispositif de fixation (1a, 1b).

11. Dispositif de fixation selon la revendication 1, caractérisé par le fait que l'élément d'expansion (6) est fabriqué en fonte malléable.

12. Dispositif de fixation selon la revendication 1, caractérisé par le fait que l'élément d'expansion (6) est fabriqué à partir d'un flan de plomb, les bords du flan de plomb étant repliés en forme de toit vers l'intérieur et les dents (8) étant estampées.
